# EUROPÄISCHE PATENTSCHRIFT

(11) **EP 1 288 630 B1**
(45) Veröffentlichungstag und Bekanntmachung des Hinweises auf die Patenterteilung: **25.06.2008**
(21) Anmeldenummer: 02018833.0
(22) Anmeldetag: 23.08.2002
(51) Int. Cl.: G01D 5/14

(54) **Vorrichtung zur Drehwinkelerfassung**
Device for detecting an angle of rotation
Dispositif de détection d'angle de rotation

(30) Priorität: 04.09.2001 DE 10143397
(43) Veröffentlichungstag der Anmeldung: 05.03.2003
(73) Patentinhaber: Pierburg GmbH, 41460 Neuss (DE)
(72) Erfinder: Ludwig, Norbert, 41379 Brüggen (DE); Bürger, Frank, 52355 Düren (DE)
(74) Vertreter: Patentanwälte ter Smitten

(56) Entgegenhaltungen:
- DE-A1- 19 903 490
- DE-C1- 19 803 598
- US-A- 4 745 363
- US-A- 5 332 965

## Beschreibung

Die Erfindung betrifft eine Vorrichtung zur Drehwinkelerfassung, insbesondere zur Drehwinkelerfassung von Drosselklappen oder Abgasklappen in Abgasrückführsystemen. Ferner betrifft die Erfindung eine Vorrichtung zur Magnetfelderfassung.

Eine Vorrichtung zur Bestimmung des Drehwinkels, d.h. des Öffnungswinkels, einer Drosselklappe ist in DE 199 03 490 beschrieben. Die Drosselklappe ist mit einer Schwenkachse und über mehrere Zwischenelemente mit einem konzentrisch zur Schwenkachse angeordneten Ringmagnet verbunden. Der Ringmagnet wird somit beim Schwenken der Drosselklappe mitgedreht. In einem Gehäusedeckel sind zwei Magnetfeldsensoren, wie beispielsweise Hall-Sensoren, angeordnet. Von den beiden Sensoren werden zwei winkelabhängige Signale erzeugt. Die beiden von den Sensoren erzeugten Feldabwicklungskurven sind im Wesentlichen sinusförmig, wobei die Kurven in einem Winkelbereich von ±45° im Wesentlichen linear sind.

Um eine möglichst exakte Erfassung des Drehwinkels zu ermöglichen, müssen sehr empfindliche Sensoren sowie starke Dauermagneten eingesetzt werden. Nur bei einer relativ großen Feldstärke im Bereich des Sensors kann eine genaue Winkelerfassung erfolgen.

Es handelt sich hierbei um aufwendige Flussringkonzepte. Derartige Fluxringe sind teuer und in der Montage aufwändig.

D1 199 03 490 beschreibt einen Drehwinkelsensor mit einem ringförmigen Magneten, der rotierbar mit einer Welle verbunden ist. Um diesen ringförmigen Magneten ist ein fixes Statorelement angebracht, das zwei Abstandsausnehmungen aufweist, in die zwei sich gegenüberliegende Hallsensoren hineinragen.

US 5,332,965 beschreibt eine Vorrichtung zur Drehwinkelerfassung, die einen mit einer Welle rotierbaren Permanentmagneten aufweist. Koaxial zu diesem Permanentmagneten ist ein Magnetfeldsensor angeordnet, an dessen Seiten in radialer Richtung zwei L-förmige Fluxkonzentratoren angeordnet sind. Diese dienen einer Linearisierung des Ausgangssignals des Magnetfeldsensors.

US 4,745,363 beschreibt einen Magnetfeldsensor zur Detektion eines Zahnrades, wobei zur Verstärkung des Magnetfeldes Fluxkonzentratoren vorgesehen sind. Die Detektion des Magnetfeldes erfolgt durch Hallsensoren.

Aufgabe der Erfindung ist es, eine Vorrichtung zur Drehwinkelerfassung, insbesondere für Drossel- und Abgasklappen sowie eine Vorrichtung zur Magnetfelderfassung zu schaffen, wobei auf einfache Weise eine Magnetfeldverstärkung erfolgt.

Die Lösung der Aufgabe erfolgt erfindungsgemäß durch die Merkmale des Anspruchs 1.

Die erfindungsgemäße Vorrichtung zur Drehwinkelerfassung, die insbesondere für Drossel- und Abgasklappen bei Kraftfahrzeugen geeignet ist, weist eine Schwenkachse auf, deren Winkel erfasst werden soll. Mit der Schwenkachse ist eine Antriebseinrichtung, wie ein Elektromotor, zum Schwenken der Schwenkachse verbunden. Ferner ist im Abstand zur Schwenkachse auf einer Kreislinie ein Dauermagnet angeordnet. Benachbart zu dem Dauermagneten ist mindestens ein Magnetfeldsensor angeordnet. Bei dem Sensor handelt es sich vorzugsweise um berührungslose Sensoren, beispielsweise Hall-Sensoren. Die Bestimmung des Schwenkwinkels der Schwenkachse erfolgt aufgrund der Relativbewegung zwischen dem Dauermagneten und den Magnetfeldsensoren, die herbei ein winkelabhängiges Signal erzeugen. Erfindungsgemäß ist ein als Magnetfeld-Verstärkungseinrichtung wirkendes Plättchen im Bereich des Magnetfeldsensors vorgesehen. Durch das erfindungsgemäß als magnetisierbares Plättchen ausgestaltete Verstärkungselement wird das Magnetfeld im Bereich des Magnetfeldsensors verstärkt.

Hierbei wurde festgestellt, dass ein vorzugsweise ebenes Plättchen eine ausreichende Magnetfeldverstärkung bewirkt. Es ist insbesondere bei Vorrichtungen zur Drehwinkelerfassung, die für Drossel- und Abgasklappen bei Kraftfahrzeugen genutzt werden, nicht erforderlich, einen aufwendigen Fluxring vorzusehen. Allein durch das Vorsehen eines magnetisierbaren Plättchens, das beispielsweise auch in Form eines den Sensor teilweise umhüllenden Elements oder entsprechenden an die Umgebungsbedingungen angepasstes Element möglich ist, das Magnetfeld in diesem Bereich und damit auch im Bereich des Magnetfeldsensors zu erhöhen. Durch das erfindungsgemäße magnetisierbare Plättchen erfolgt eine Bündelung der Feldlinien und damit eine Erhöhung der magnetischen Flussdichte. Hierdurch ist es möglich, den exakten Drehwinkel bzw. eine Relativbewegung zwischen dem Dauermagneten und dem Sensor genauer zu bestimmen.

Anstelle der Erfassung eines Drehwinkels kann eine derartige Vorrichtung auch zur Erfassung einer anderen, beispielsweise linearen Relativbewegung zwischen einem Dauermagneten und einem Magnetfeldsensor eingesetzt werden. Der hierbei verwendete Magnetfeldsensor ist erfindungsgemäß wiederum mit einem magnetisierbaren Plättchen im Bereich des Magnetfeldsensors ausgestattet.

Bei einer besonders bevorzugten Ausführungsform weist das Plättchen im Wesentlichen die Größe des Magnetfeldsensors auf. Die Größe ist ausreichend, um eine gute Verstärkung des Magnetfelds hervorzurufen. Insbesondere bei einer derartigen Größe ist es möglich, das Plättchen mit dem Magnetfeldsensor, beispielsweise durch Aufkleben zu verbinden.

Vorzugsweise handelt es sich bei dem Plättchen um ein Weicheisen aufweisendes Material. Besonders bevorzugt ist es, das gesamte Plättchen aus Weicheisen herzustellen. Besonders bevorzugt ist ferner das Verwenden eines diametral magnetisierten Dauermagneten.

Die Erfindung betrifft ferner eine Vorrichtung zur Magnetfelderfassung mit einem Magnetfeldsensor und einem als Magnetfeldverstärkungseinrichtung dienenden magnetisierbaren Plättchen, das im Bereich des Magnetfeldsensors angeordnet, vorzugsweise mit diesem verbunden ist. Bei dieser Vorrichtung handelt es sich grundlegend um dieselbe Erfindung wie bei der vorstehend beschriebenen Drehwinkelerfassung. Ein wesentlicher Aspekt liegt auch hierbei in dem Vorsehen eines magnetisierbaren Plättchens im Bereich des Magnetfeldsensors, so dass durch das Plättchen das Magnetfeld im Bereich des Magnetfeldsensors verstärkt wird. Vorzugsweise weist das Plättchen daher ebenfalls im Wesentlichen die Größe des Magnetfeldsensors auf, ist mit dem Magnetfeldsensor verbunden und weist vorzugsweise einen hohen Anteil an Weicheisen auf oder besteht aus Weicheisen.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht einer bevorzugten Ausführungsform der Erfindung,
- Fig. 2: eine schematische Schnittansicht entlang der Linie II-II in Fig. 1 und
- Fig.3: ein Diagramm der Flussdichte mit und ohne erfindungsgemäße Magnetfeld-Verstärkungseinrichtung.

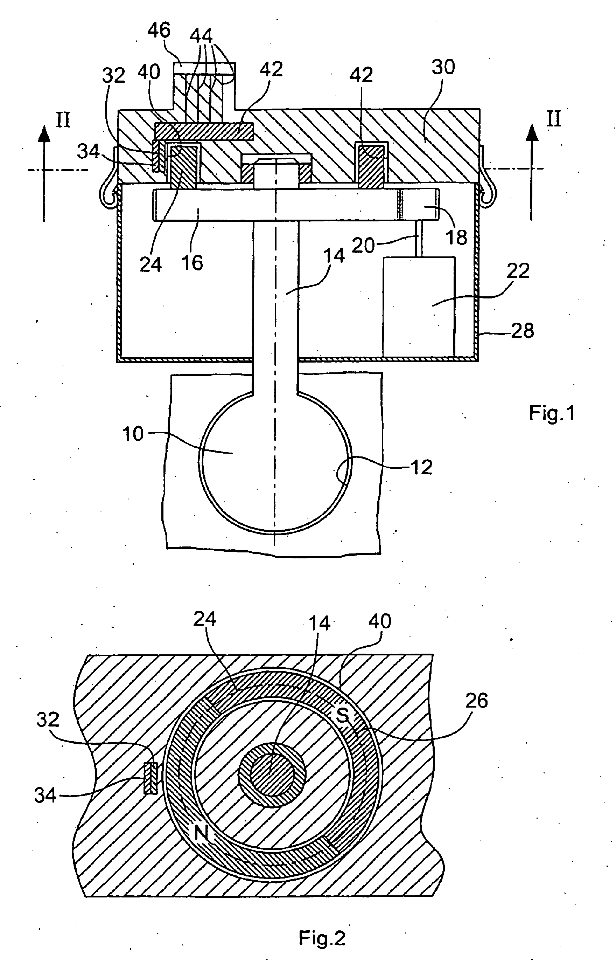

In den Fign. 1 und 2 ist die erfindungsgemäße Vorrichtung zur Drehwinkelerfassung mit einer Drossel- oder Abgasklappe 10 verbunden. Die Klappe 10 ist in einem Kanal 12 angeordnet und mittels einer Schwenkachse 14 schwenkbar. Die Schwenkachse 14 ist mit einem Zahnrad 16 verbunden, in das ein Ritzel 18 eingreift. Das Ritzel 18 ist über eine Welle 20 mit einer Antriebseinrichtung 22 verbunden. Durch Betätigen der Antriebseinrichtung 22 kann somit die Stellung der Klappe 10 in dem Kanal 12 verändert werden. Hierdurch ist die Durchflußmenge durch den Kanal 12 variierbar.

Zur Erfassung des Drehwinkels der Klappe 10 bzw. der Schwenkachse 14 ist das Zahnrad 16 mit einem halbkreisförmigen Magneten 24 verbunden. Der Magnet 14 ist auf einer zur Schwenkachse 14 konzentrischen Kreislinie 26 angeordnet.

Die Antriebseinrichtung 22, die Schwenkachse 14 sowie das Zahnrad 16 und das Ritzel 18 sind in einem Gehäuse 28 angeordnet. Das Gehäuse 28 ist mit einem Deckel 30 verschließbar. Innerhalb des vorzugsweise aus Kunststoff bestehenden Deckels 30 ist ein Magnetfeldsensor 32, wie beispielsweise Hall-Sensor, angeordnet. Der Sensor 32 kann vollständig in Kunststoff eingegossen sein.

Der Magnetfeldsensor 32 ist mit einem vorzugsweise aus Weichmetall bestehenden Plättchen 34 verbunden. Insbesondere ist das Plättchen 34 auf die Rückseite des Sensors 32 aufgeklebt. Der Sensor 32 ist somit vorzugsweise zwischen dem Plättchen 34 und dem Magnet 24 angeordnet. Durch das magnetisierbare Plättchen erfolgt eine Verdichtung des Magnetfeldes im Bereich des Magnetfeldsensors 32. Der Sensor 32 ist mit einer ebenfalls in den Kunststoffdeckel 30 eingegossenen Platine 42 verbunden. Die Platine 42 ist über Leitungen 44 mit einem Steckkontakt 46 verbunden.

In montiertem Zustand ragt der Magnet 24 in eine in dem Deckel 30 vorgesehene kreisringförmige Öffnung 40.

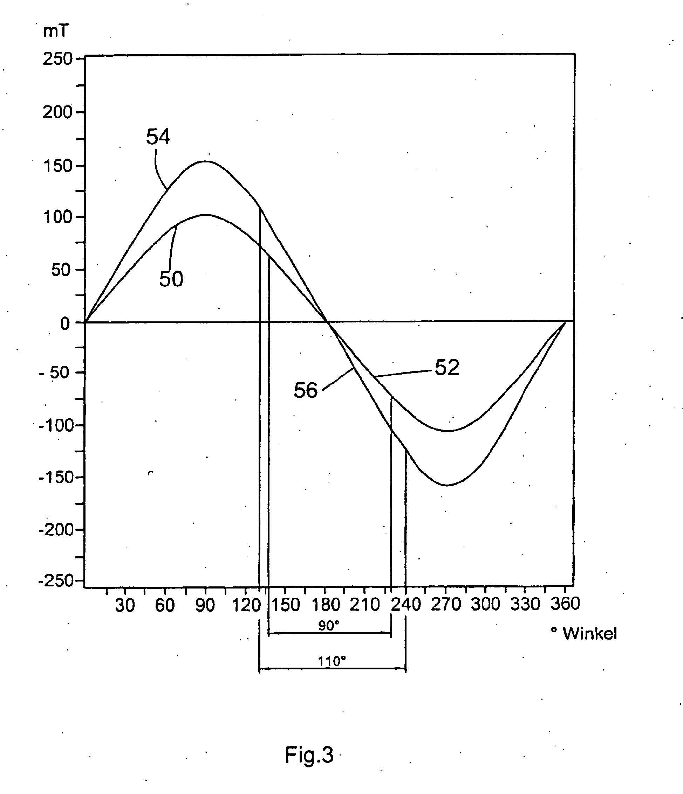

Aus den beiden in Fig. 3 dargestellten Kurven sind die unterschiedlichen Magnetfeldstärken im Bereich des Sensors 32 mit und ohne Magnetfeld-Verstärkungseinrichtung 34 ersichtlich. Die Kurve 50 zeigt die Flussdichte im Bereich des Sensors 32, wenn das Plättchen 34 nicht vorgesehen ist. Die Kurve schwankt im dargestellten Beispiel zwischen + 100 und - 100 mT. Insbesondere zur Drehwinkelerfassung kann nur ein im Wesentlichen linearer Bereich 52 genutzt werden. Dieser Bereich ist bei der Kurve 50 ohne magnetisierbares Plättchen etwa 90°. Da das Verstellen der Drosselklappe in einem Bereich von 90° erfolgt, muss eine sehr genaue Montage bezüglich der Lage des Dauermagneten 24 zu dem Sensor 32 erfolgen, da bereits bei geringen Verschiebungen der Messbereich außerhalb des linearen Bereichs 52 liegt und somit zu Verfälschungen der Messergebnisse führt.

Mit Hilfe des erfindungsgemäßen Vorsehens eines magnetisierbaren Plättchens 34 im Bereich des Sensors 32 kann die Kurve 54 erzielt werden. Diese schwankt zwischen + 150 und -150mT. Hieraus ergibt sich, dass die Kurve in einem Bereich 56 von etwa 110° linear verläuft. Dies hat zur Folge, dass Montageungenauigkeiten nicht so relevant sind wie bei der Kurve 50.

## Patentansprüche

1. Vorrichtung zur Drehwinkelerfassung, insbesondere für Drossel- und Abgasklappen, mit
einer Schwenkachse (14), deren Schwenkwinkel erfasst werden soll,
einer mit der Schwenkachse (14) verbundenen Antriebseinrichtung (28) zum Schwenken der Schwenkachse (14),
einem in einem Abstand zur Schwenkachse (14) auf einer Kreislinie (26) angeordneten Dauermagnet (24),
mindestens einem benachbart zu dem Dauermagneten (24) angeordneten Magnetfeldsensor (32),
ein magnetisierbares Plättchen (34) zur Erhöhung der magnetischen Flussdichte im Bereich des Magnetfeldsensors (32),
wobei durch Schwenken der Schwenkachse (14) eine Relativbewegung zwischen dem Dauermagneten (24) und dem Magnetfeldsensor (32) erfolgt, so dass der Magnetfeldsensor (32) ein winkelabhängiges Signal erzeugt,
**dadurch gekennzeichnet, daß**
das magnetisierbare Plättchen (34) mit dem Magnetfeldsensor (32) verbunden ist, der Magnetfeldsensor (32) zwischen dem Plättchen (34) und dem Dauermagneten (24) angeordnet ist und das Plättchen (34) im Wesentlichen die Größe des Magnetfeldsensors (32) aufweist.

2. Vorrichtung nach Anspruch 1, **dadurch gekennzeichnet, dass** die Sensoren (32) Hall-Sensoren sind.

3. Vorrichtung nach einem der Ansprüche 1-2, **dadurch gekennzeichnet, dass** die Schwenkachse (14) in einem Gehäuse (28) und die Magnetfeldsensoren (32) in einem Gehäusedeckel (30) angeordnet sind.

4. Vorrichtung nach Anspruch 3, **dadurch gekennzeichnet, dass** die Magnetfeldsensoren (32) in dem Gehäusedeckel (30) eingegossen sind.

5. Vorrichtung nach einem der Ansprüche 1-4, **dadurch gekennzeichnet, dass** das Plättchen (34) insbesondere durch Aufkleben mit dem Magnetfeldsensor (32) verbunden ist.

6. Vorrichtung nach einem der Ansprüche 1-5, **dadurch gekennzeichnet, dass** das Plättchen (34) Weicheisen aufweist.

7. Vorrichtung nach einem der Ansprüche 1-6, **dadurch gekennzeichnet, dass** der Dauermagnet (24) diametral magnetisiert ist.

## Claims

1. A device for detecting an angle of rotation, in particular for throttle valves or exhaust flaps, comprising
a pivot axis (14) whose pivot angle is to be detected,
a drive means (28) for pivoting the pivot axis (14), said drive means being connected with said pivot axis (14),
a permanent magnet (24) arranged at a distance from the pivot axis (14) on a circular line (26),
at least one magnetic field sensor (32) arranged adjacent the permanent magnet (24),
a magnetizable small plate (34) to increase the magnetic flux density in the area of the magnetic field sensor (32), wherein by pivoting the pivot axis (14) a relative movement between the permanent magnet (24) and the magnetic field sensor (32) is caused, so that the magnetic field sensor (32) generates an angle-dependent signal,
**characterized in that**
the magnetizable small plate (34) is connected with the magnetic field sensor (32), that the magnetic field sensor (32) is arranged between the small plate (34) and the permanent magnet (24), and that the small plate (34) substantially has the size of the magnetic field sensor (32).

2. The device of claim 1, **characterized in that** the sensors (32) are Hall sensors.

3. The device of one of claims 1-2, **characterized in that** the pivot axis (14) is arranged in a housing (28) and the magnetic field sensors (32) are arranged in a housing lid (30).

4. The device of claim 3, **characterized in that** the magnetic field sensors (32) are molded into the housing lid (30).

5. The device of one of claims 1-4, **characterized in that** the small plate (34) is connected with the magnetic field sensor (32) especially by adhesion.

6. The device of one of claims 1-5, **characterized in that** the small plate (34) comprises soft iron.

7. The device of one of claims 1 to 6, **characterized in that** the permanent magnet (24) is diametrically magnetized.

## Revendications

1. Dispositif de détection d'angle de rotation, particulièrement pour papillons de gaz ou clapets des gaz d'*échappement, comprenant
un axe de pivotement (14), dont l'angle de pivotement est à détecter,
des moyens d'entraînement (28) pour le pivotement de l'axe de pivotement (14),
un aimant permanent (24) prévu écarté de l'axe de pivotement (14) sur une ligne circulaire (26),
au moins un capteur de champ magnétique (32) agencé à proximité de l'aimant permanent (24),
une plaquette aimantable (34) pour augmenter la densité de flux magnétique dans la région du capteur de champ magnétique (32), un déplacement rélatif étant produit entre l'aimant permanent (24) et le capteur de champ magnétique (32) par le pivotement de l'axe de pivotement (14), de sorte que le capteur de champ magnétique (32) produit un signal fonction de l'angle,
**caractérisé en ce**
**que** la plaquette aimantable (34) est reliée au capteur de champ magnétique (32), que le capteur de champ magnétique (32) est disposé entre la plaquette (34) et l'aimant permanent (24), et que la plaquette (34) a sensiblement les dimensions du capteur de champ magnétique (32).

2. Dispositif selon la revendication 1, **caractérisé en ce que** les capteurs (32) sont des capteurs de Hall.

3. Dispositif selon une quelconque des revendications 1-2, **caractérisé en ce que** l'axe de pivotement (14) est prévu dans un boîtier (28) et les capteurs de champ magnétique (32) sont disposés dans un couvercle (30) du boîtier.

4. Dispositif selon la revendication 3, **caractérisé en ce que** les capteurs de champ magnétique (32) sont moulés dans le couvercle (30) du boîtier.

5. Dispositif selon une quelconque des revendications 1-4, **caractérisé en ce que** la plaquette (34) est reliée au capteur de champ magnétique (32) particulièrement par collage.

6. Dispositif selon une quelconque des revendications 1-5, **caractérisé en ce que** la plaquette (34) comprend de fer doux.

7. Dispositif selon une quelconque des revendications 1-6, **caractérisé en ce que** l'aimant permanent (24) est aimanté diamétralement.
